# EUROPEAN PATENT SPECIFICATION

(11) **EP 1 219 091 B1**
(45) Date of publication and mention of the grant of the patent: **30.08.2006**
(21) Application number: 00966620.7
(22) Date of filing: 15.09.2000
(51) Int. Cl.: H04L 29/06, H04Q 7/24, H04Q 7/38

(54) **WIDE AREA NETWORK MOBILITY FOR IP BASED NETWORKS**
WEITBEREICHSNETZ (WAN) MOBILITÄT FÜR IP-BASIERTE NETZEN
MOBILITE DANS UNE ZONE ETENDUE POUR DES RESEAUX BASES SUR UN PROTOCOLE INTERNET

(30) Priority: 08.10.1999 US 158138 P; 12.10.1999 US 416757
(43) Date of publication of application: 03.07.2002
(73) Proprietor: TELEFONAKTIEBOLAGET LM ERICSSON (publ), 164 83 Stockholm (SE)
(72) Inventor: MADOUR, Lila, Kirkland, Quebec H9T 3W2 (CA); SULTANA, Shabnam, S-164 46 Kista (SE)
(74) Representative: Norin, Klas
(86) International application number: PCT/SE2000/001792
(87) International publication number: WO 2001/028185

(56) References cited:
- EP-A- 0 924 914
- WO-A-99/31853
- US-A- 5 325 362
- POLLINI G P ET AL: "HANDOVER PROTOCOLS BETWEEN METROPOLITAN AREA NETWORKS" PROCEEDINGS OF THE GLOBAL TELECOMMUNICATIONS CONFERENCE (GLOBECOM),US,NEW YORK, IEEE, vol. -, 1992, pages 11-15, XP000357752 ISBN: 0-7803-0608-2
- CACERES R ET AL: "Fast and scalable wireless handoffs in support of mobile Internet audio" MOBILE NETWORKS AND APPLICATIONS,BALTZER SCIENCE PUBLISHERS, BUSSUM,NL, vol. 3, no. 4, 1998, pages 351-363, XP002135845 ISSN: 1383-469X

## Description

### BACKGROUND

Applicants' invention relates generally to IP based networks and, more particularly, to mobility between IP based networks.

Fixed data networks, such as the Internet, have conventionally been used for the communication of digital data between different nodes in the network. With the increasing use of mobile nodes, however, such as portable notebook computers, fixed data networks have often become disadvantageous due to the lack of connections to the fixed data network at any specific location to which a mobile node might roam. To solve this problem, data communications using mobile communications system have been implemented to provide mobility for mobile nodes. Such mobile data communications systems typically involve packet radio systems such as General Packet Radio Services (GPRS) or Cellular Digital Packet Data (CDPD) that use IP based protocols. These packet radio systems advantageously permit a mobile node to roam within a cellular network while retaining the ability to initiate data communications at any location within the network.

Mobility in data communications is, however, problematic when a mobile node moves across cellular networks. Thus, if a mobile node moves from a first network to a second network data communications may be lost. For example, in a GPRS system, inter-GGSN (Gateway GPRS Serving Node) communication is currently not defined and, thus, data packets will be lost because a tunnel cannot be established to reroute data packets to the new Serving GPRS Serving Node (SGSN) in the second network from the old SGSN/GGSN in the first network. Seamless data communication with a mobile node, when the mobile node roams between two heterogeneous packet data networks, thus cannot be achieved using current IP based protocols.

EP 0 924 914 discloses a method of enabling roaming of a terminal from a first to a second internet access network based on mobile IP. WO 99/31853 shows a method of routing data through the Internet to a mobile node by using home agents and foreign agents to provide mobility.

### SUMMARY

It is this an object of the invention to achieve seamless data communication between two IP based packed networks when a user travels from an area serviced by a first data packet nerwork to an area serviced by a second data packer network.

In accordance with the invention a method of keeping a session active and connected while changing data communications networks comprises the steps of receiving packet, associated with a session from a first data communication network; sending a connection request from a gateway in said first network to one or more gateways in neighboring data communications networks locating a user equipment in the second data communications network by a second gateway in the second data communications network; responding, by the second gateway to the connection request from the gateway in said first network; establishing a path between the gateway in said first network and; the second gateway; forwarding packets, associated with said session, from said gateway in said first data communications network to said second gateway; and receiving, in the user equipment, said forwarded packets from said second gateway.

### BRIEF DESCRIPTION OF THE DRAWINGS

The objects and advantages of the invention will be understood by reading the following detailed description in conjunction with the example drawings in which:
FIGs. 1-2 illustrate flow diagrams of method steps in accordance with described embodiments;
FIG 3 illustrates a flow diagram of method steps in accordance with exemplary embodiments of the invention;
FIG. 4 is a flow diagram of a detach procedure
FIGs. 5 and 7 illustrate system diagrams showing messaging in accordance with described embodiments;
FIG. 6 illustrates a system diagram showing messaging in accordance with exemplary embodiments of the invention;
FIGs. 8-11 illustrate flow diagrams of method steps in accordance with a described embodiment;
FIG. 12 illustrates a system diagram showing messaging in accordance with a described embodiment; and
FIG. 13 illustrates a flow diagram of an exemplary terminal assisted handover process.

### DETAILED DESCRIPTION

Seamless data communication can be achieved in exemplary embodiments of the invention through modification of the communication protocol to enable the implementation of inter-packet network roaming. In exemplary embodiments, inter-network roaming is provided at the gateway level (example of gateways: H.323 GW, GPRS gateway, MobileIP Foreign Agent, etc.), where the gateway for the network from which a user has roamed, and the gateway for the network that the user has roamed into, are inter-operable either directly or through another gateway or proxy. To achieve inter-packet network roaming, exemplary embodiments allow a request for handover resources, using a new method named as an unsolicited connection procedure, in the network into which the user is roaming (the target network) to be initiated either by the current serving network, the target network, or by user equipment (e.g., user terminal).

The request for hand-over resources in the target network may thus be achieved using three different techniques: 1) serving network initiated handover (SNH), on which the present invention is based, where the gateway in the serving network broadcasts to possible candidate handover gateways using measurement reports provided by the user equipment; 2) target network initiated handover (TNH), where the user equipment requests the target network to notify the current serving network that the user has moved from the network and further requests that packets be forwarded to a new gateway address; and 3) terminal assisted handoff (TAH), where the user equipment performs handoff measurements, requests resources from the target network, and then forwards the information uplink to the current serving gateway which then sets up a communication path with the target gateway as supplied by the user equipment.

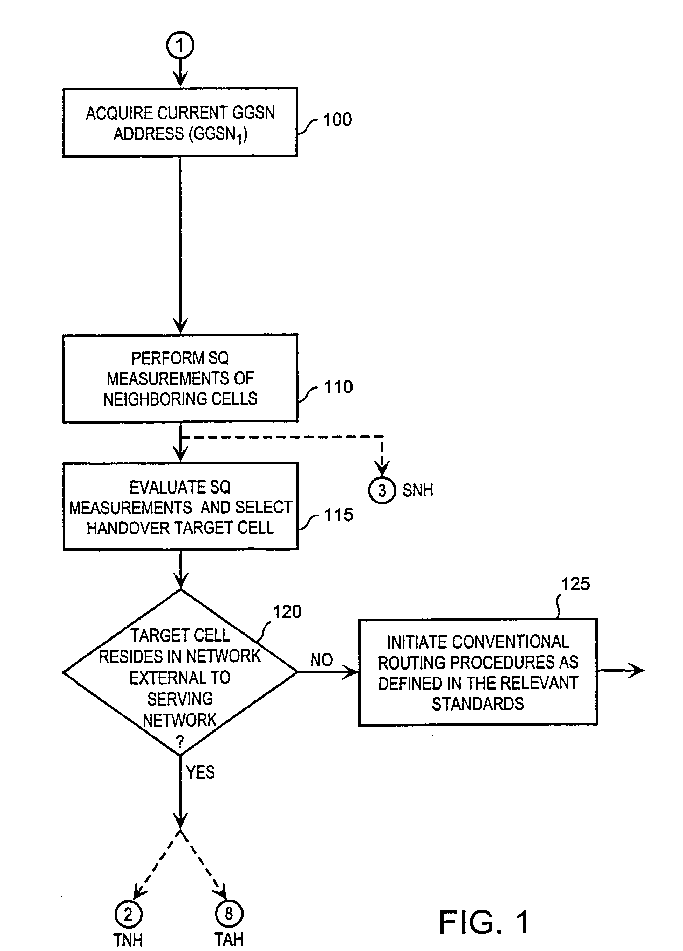

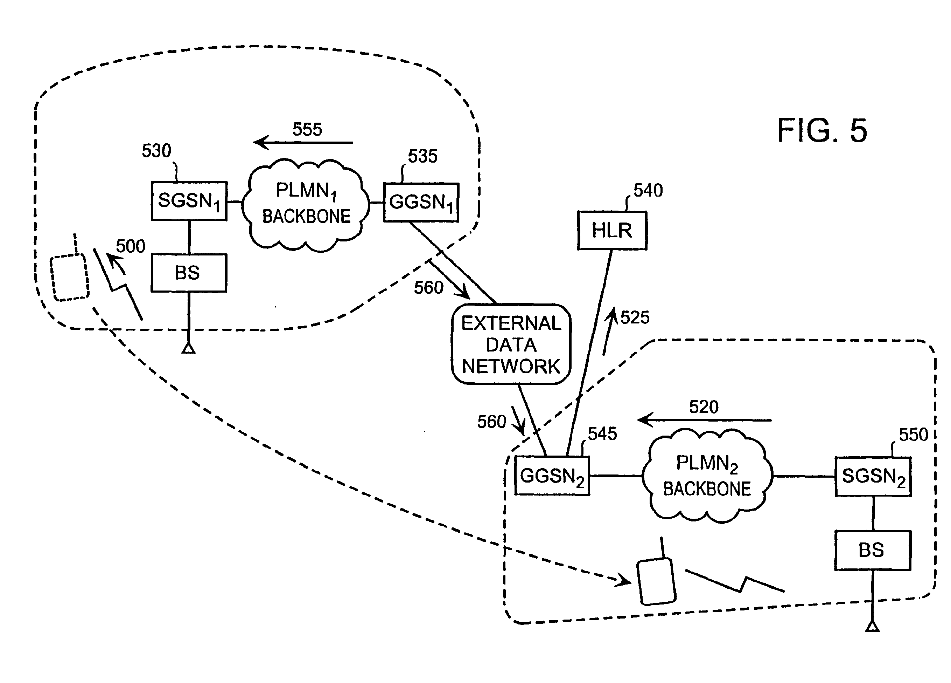

An exemplary GPRS based method of re-routing an established session to user equipment, when the user roams from a routing area administered by a first network to a routing area administered by a second network, is illustrated in Figures 1-4 and 13, with associated system messaging shown in Figures 5-7. Beginning with Figure 1, the user equipment first acquires **100,** through possibly modified mobility management procedures, the address of the current serving GGSN (GGSN₁) that may subsequently be included in the optional information element contained in the PDP context accept message. This address may be acquired through messages broadcast **(500;** Figure 5) on downlink control channels before the user equipment first initiates a session in the first network.

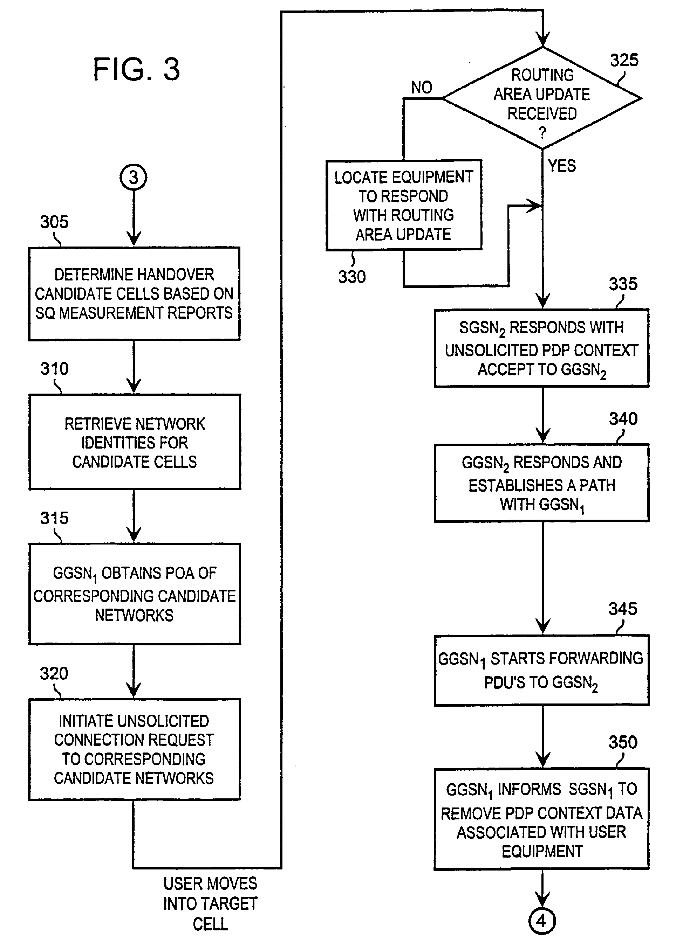

At step **110,** measurements of necessary signal quality in the current and neighboring cells are performed, using conventional techniques, as the user equipment roams throughout the current network. If serving network initiated handover is used, then step **110** of Fig. 1 proceeds to step **305** of Fig. 3 (See "Serving Network Initiated Handover" section below). If either target network initiated handover, or terminal assisted handover are used then the process proceeds to step **115** of Fig. 1. An evaluation **115** of the signal quality measurements is further performed in accordance with conventional techniques to select a target cell for hand-off in the event the user equipment roams from the edge of the current cell into a neighbor cell. The SGSN₁ **(530;** Fig. 5) then can determine **120**, using a local database containing roaming information, that the candidate target cell resides in a network that is external to the current serving network. If the target cell resides within the current serving network, conventional routing procedures are initiated **125.** If, however, the target cell does reside in an external network (implying inter-gateway handoff), a re-routing procedure in accordance with the exemplary embodiments is performed.

Two alternative techniques, although not claimed in the present invention, can be used for re-routing the data to the user equipment in the candidate network. In a first technique (TNH), where the target network initiates handover of the data communication, GGSN₁ begins forwarding the buffered packets after being contacted by the GGSN in the external network (GGSN₂). In a second technique (TAH), where the user equipment initiates handover, GGSN₁ begins forwarding the buffered packets when the user equipment supplies the address of GGSN₂. A GPRS system has been used to illustrate the different techniques (TNH, SNH, TAH) for re-routing data. Other systems, however, can easily use these techniques to provide wide area network mobility.

### Target Network Initiated Handover (TNH)

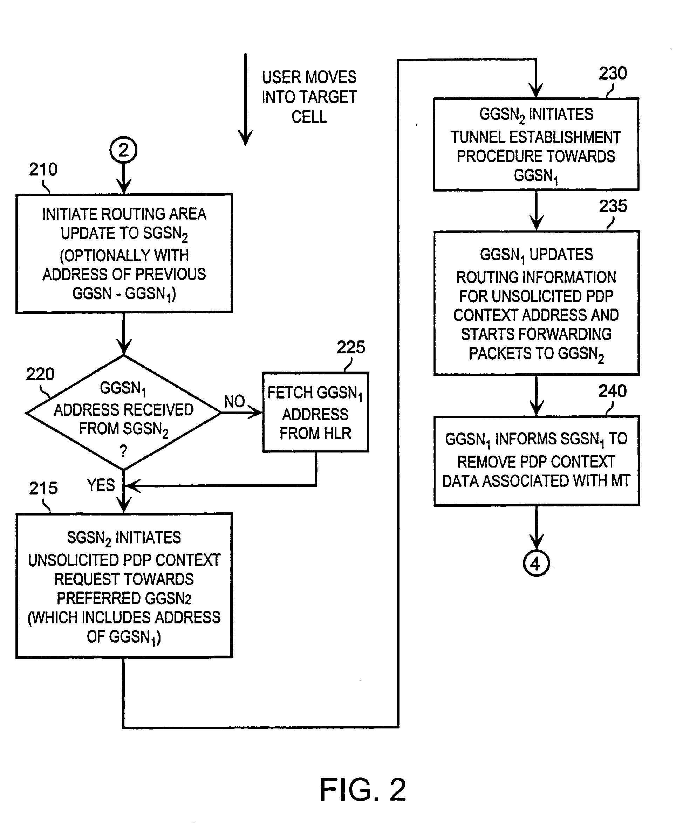

Following the acquisition **100** of the current GGSN by the user equipment (as shown in Fig. 1), an exemplary GPRS based target network initiated handover process can be performed, as illustrated in Fig. 2. In this exemplary process, the user first roams into the target cell before the user equipment initiates **210** a routing area update to the SGSN serving the target cell (SGSN₂). This routing area update can optionally include the address of GGSN₁ **(535;** Fig. 5) in the current serving network or other parameters such as the Routing Area ID (specified in ETSI GSM 03.60) and session parameters. SGSN₂ **(550;** Fig. 5) then initiates **215** an unsolicited PDP context request **(520;** Fig. 5) towards the preferred GGSN in the target network. This PDP context request will include the GGSN₁ address if this address has been provided by the user equipment. If this address has not been provided by the user equipment, GGSN₂ will fetch **225 (525;** Fig. 5) the GGSN₁ address from the home location register (HLR) **(540;** Fig. 5) after receiving the unsolicited PDP context request from SGSN₂. GGSN₂ then initiates **230** a tunnel establishment procedure (e.g., IETF, ETSI GSM 9.60) towards GGSN₁. Buffering of data in the current serving network can be initiated by SGSN₁ **(530;** Fig. 5) after the unsolicited connection procedure has been completed. To complete the re-routing process, GGSN₁ updates the routing information 235 for the PDP context address and starts forwarding packets **(560;** Fig. 5) to GGSN₂. GGSN₁ additionally informs **240** SGSN₁ to remove PDP context data associated with the mobile terminal (555; Fig. 5).

### Serving Network Initiated Handover (SNH)

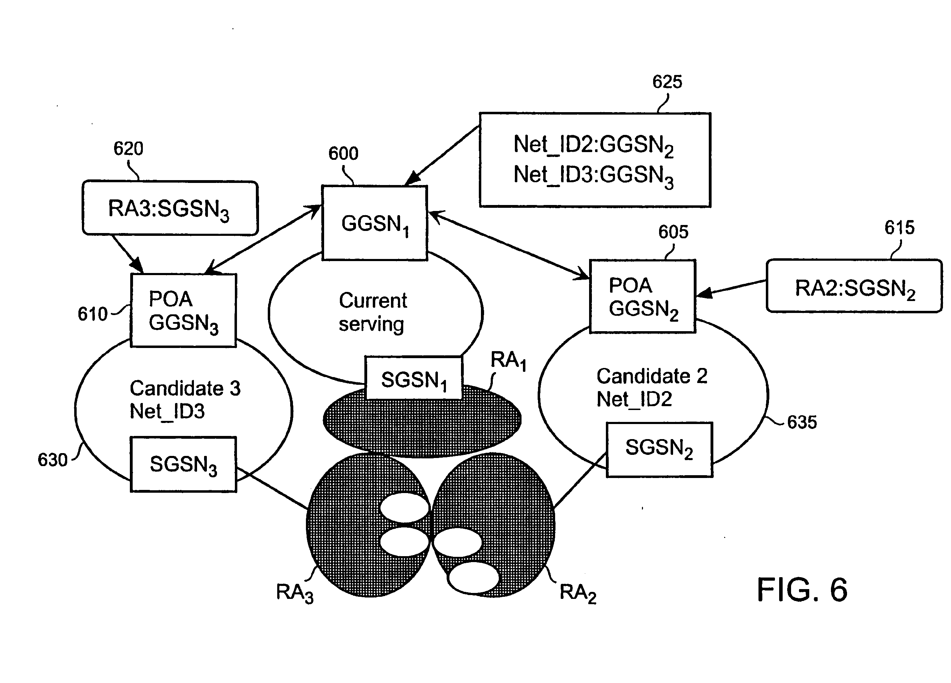

In an exemplary GPRS based serving network initiated handover process shown in Fig. 3, the handover candidate cells are first determined **305** based on the signal quality measurement reports. Using a lookup database for the cells, the network identities **(625;** Fig. 6) to which networks the candidate cells belong (if they are outside the serving network) are then retrieved **310.** A request is then sent to the current serving GGSN to initiate **320** an unsolicited PDP request to the corresponding candidate networks. The GGSN would first look up **315** the address for the point of attachment (POA) of these networks and then forward the unsolicited requests to the retrieved addresses. The transfer procedure begins before a target cell has been chosen by the equipment, therefore the transfer procedure/connection request will be sent to all GGSNs associated with any of the candidate cells. If any of the candidate cells could reside in the original network as well as in neighboring networks, a conventional intra-network procedure will be initiated at the same time as this new procedure. It may be possible that more than one point of attachment address is returned for one candidate network, in which case, the GGSN may choose to forward the request to all of them or to select only one address from the list.

Fig. 6 shows the scenario where two candidate networks (Candidate 2 635 and Candidate 3 **630)** were selected and one point of attachment is returned per candidate network. The serving GGSN initiates an unsolicited PDP context request towards GGSN₂ **605** and GGSN₃ **610** which includes information such as the current RA (routing area) and the candidate RAs (RA₂ **615** and RA₃ **620** respectively). GGSN₂ **605** and GGSN₃ **610** would look up the corresponding SGSNs using the received candidate routing area information. Once the candidate GGSN's (GGSN₂ and GGSN₃) have looked up their corresponding SGSNs (SGSN₂, SGSN₃) associated with the candidate RAs, the unsolicited PDP context request is forwarded down to the SGSNs from the GGSNs in the candidate networks. For clarification, it is noted that the relationship between SGSN and GGSN may not be one to one. Many GGSNs could contact the same SGSN.

At step **325,** SGSN₂ and SGSN₃ determine if a routing area update has been received from the user equipment. If not, SGSN₂ and SGSN₃ will locate **330** the user equipment to request that the equipment respond to the locate with a routing area update. The user equipment decides to respond to the locate in RA₂ and responds with a routing area update message back to SGSN₂. Meanwhile SGSN₃ is informed that the user equipment is not reachable in RA₃ and informs GGSN₃ about the failure to reach the user. GGSN₃ responds back to the serving GGSN that candidate Net_Id3 is not able to reach the user. The serving GGSN waits for the other responses to come back from the other candidate network. When SGSN₂ receives the routing area update message from the user equipment as a response to the locate, it will send **335** an unsolicited PDP context message back to GGSN₂. GGSN₂ then responds **340** to the request from GGSN₁ by establishing a path with GGSN₁. Only the first successful response from a candidate GGSN would be accepted, the rest would be discarded. After the path between GGSN₁ and GGSN₂ is established, GGSN₁ begins **345** forwarding Packet Data Units (PDU's) to GGSN₂. To complete the re-routing process, GGSN₁ informs **350** SGSN₁ to remove PDP context data associated with the mobile terminal.

### Terminal Assisted Handover (TAH)

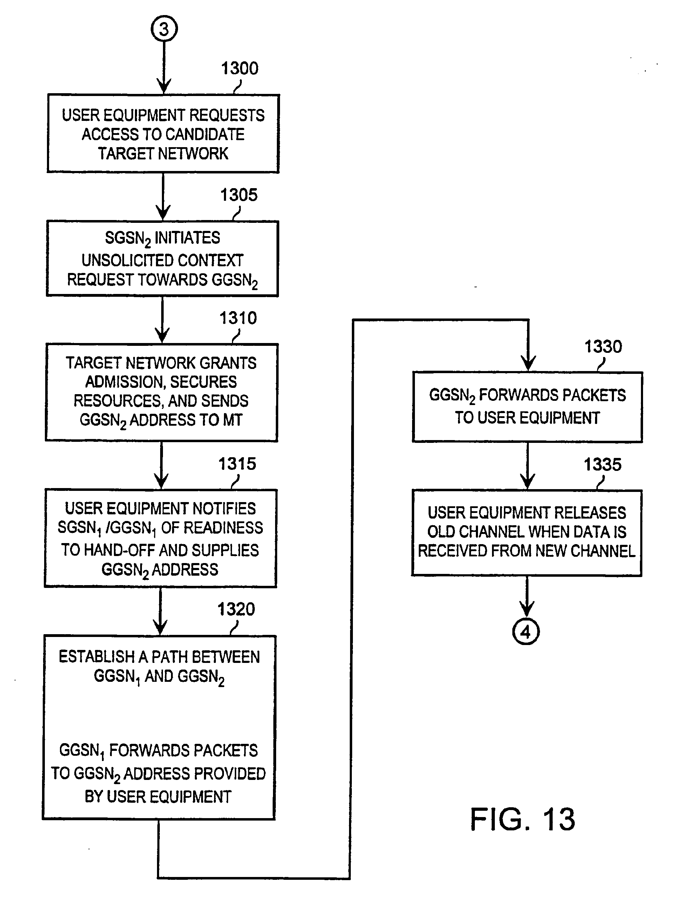

In an exemplary GPRS based terminal assisted handover process shown in Fig. 13, the user equipment (e.g., terminal) itself initiates the hand-off to the target network. Once the user equipment selects a target cell **(115;** Fig.1), the user equipment requests **(1300;** Fig. 13) access to the target network using, for example, an access handoff message. This request would include the type of service required, the quality of service, the session information, and the address of the GGSN of the network currently serving the user equipment (address of GGSN₁). In response to the access request from the user equipment, an unsolicited context request would be initiated 1305 from SGSN₂ in the target routing area towards GGSN₂ in the target network. The target network would then grant **1310** admission to the user equipment and secure resources to provide a connection with the equipment. The target network would further provide the address of the serving GGSN (GGSN₂) in the target network to the user equipment. The user equipment subsequently notifies **1315** the current serving SGSN₁/GGSN₁ of the equipment's readiness for handoff and supplies the address of GGSN₂. SGSN₁ requests GGSN₁ to buffer the data. The user equipment may also supply a new PDP address if provided by the target network.

In response to the notification from the user equipment, the serving GGSN₁ then starts forwarding **1320** data packets intended for the user equipment to the GGSN address (GGSN₂) provided by the user equipment. When the user equipment begins receiving data **1330** from the new channel established with the target network, the user equipment releases **1335** the old channel with the previous network.

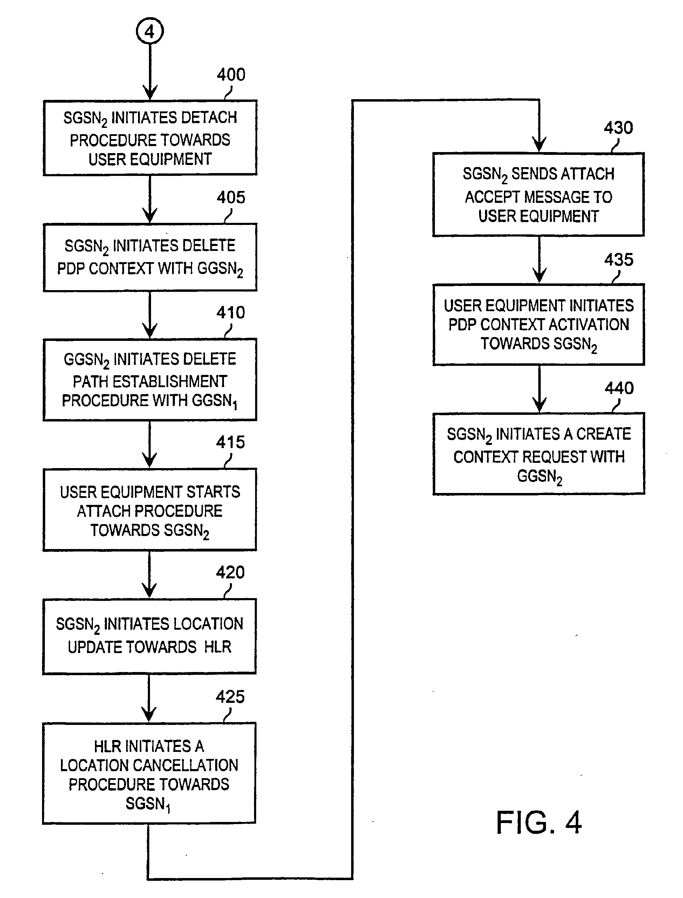

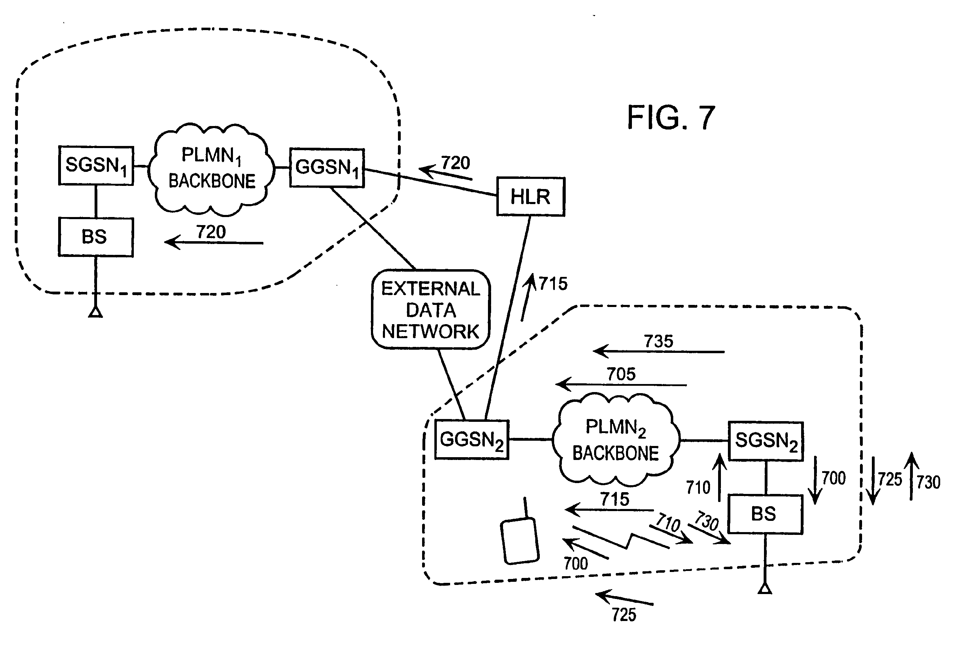

Following completion of any of the three of the inter-GGSN packet re-routing techniques described above, an optional procedure for PDP context deactivation may be performed as shown in Figure 4. The method of Figure 4 may be initiated following the termination of Packet Data Unit (PDU) transfer from GGSN₁ to GGSN₂. In this exemplary method, SGSN₂ first initiates **400** a Detach procedure **(700;** Fig. 7) towards the user equipment, requesting that the terminal initiate Attach and PDP context activation procedures. The SGSN₂ then initiates **405** a Delete PDP context (705; Fig. 7) with the serving GGSN₂. In turn, the GGSN₂ initiates **410** a procedure to delete path establishment with GGSN₁.

Subsequent to the delete path procedure by GGSN₂, the user equipment begins **415** an Attach procedure (710; Fig. 7) towards SGSN₂, using conventional messaging such as, for example, that described in the GSM Standard 03.60. In response to the Attach request from the user equipment, SGSN₂ initiates 420 a location update request **(715;** Fig. 7) towards the HLR. The HLR then initiates **425** a location cancellation procedure **(720;** Fig. 7) towards SGSN₁. SGSN₂ then sends **430** an Attach accept message **(725;** Fig. 7) to the user equipment, which in turn responds by initiating **435** an Activate PDP context request **(730;** Fig. 7) towards SGSN₂. Subsequently, SGSN₂ initiates **440** a create PDP context request **(735;** Fig. 7) with GGSN₂. The user equipment or SGSN₂ may request a PDP context activation with GGSN₁ in certain circumstances such that GGSN₂ creates a hierarchical tunnel between GGSN₂ and GGSN₁. For example, the hierarchical tunnel may be created in the circumstance where a connection request cannot be satisfied by the current serving network.

### Target Network Initiated Handover Using MobilelP

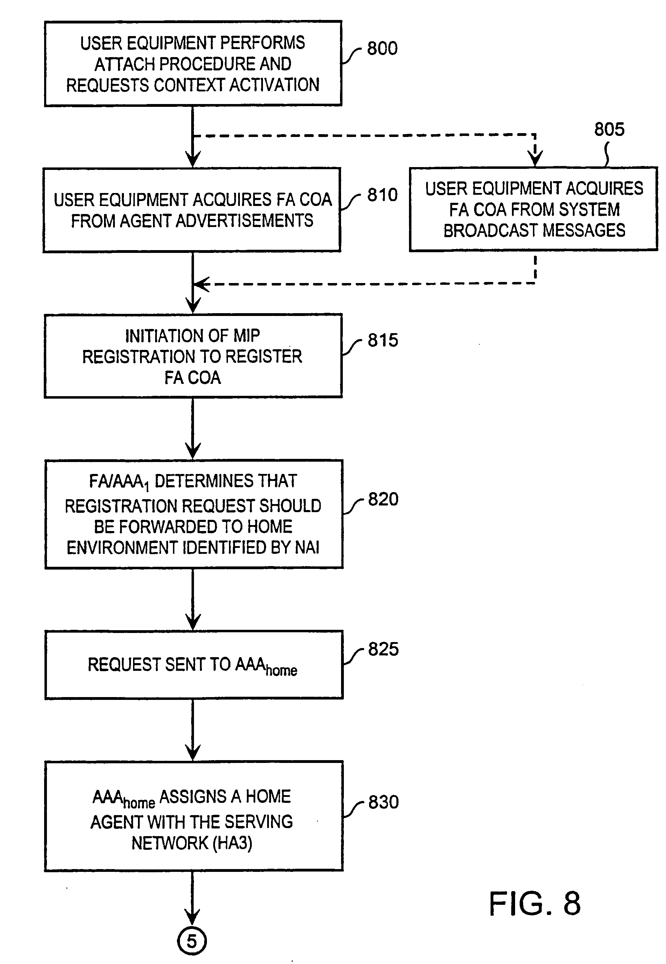

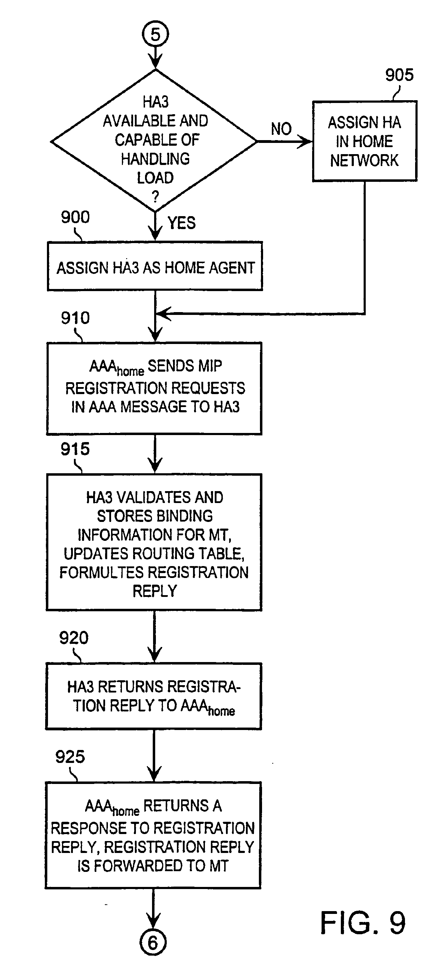

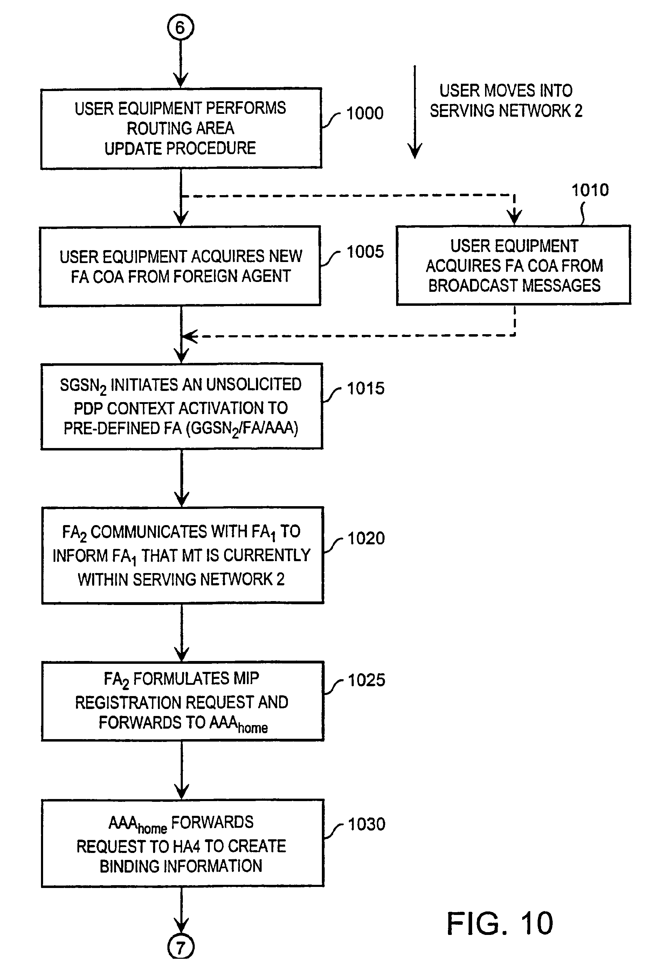

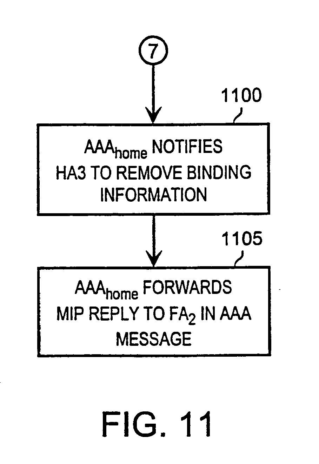

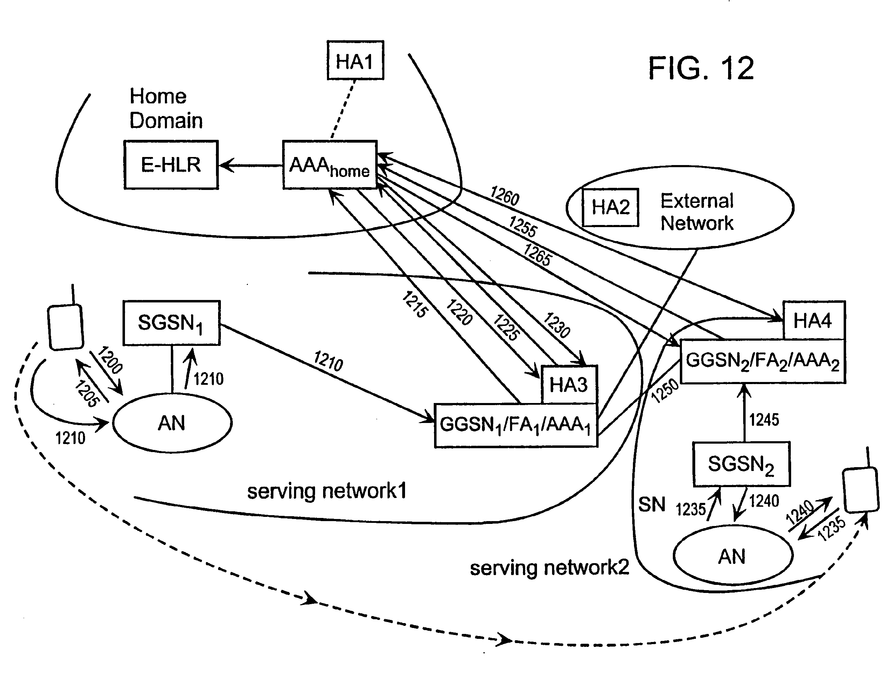

Another non claimed embodiment for providing seamless data communication between two packet networks is shown in Figures 8-11, with associated system messaging shown in Figure 12. In this solution to the problem of re-routing packet data when user equipment roams from a routing area administered by a first serving network to a routing area administered by a second serving network, it is assumed that the first and second serving networks communicate using MobileIP protocol. At step **800,** the user equipment first performs an attach procedure and requests PDP context activation **(1200;** Fig. 12) when registering in the first serving network ("Serving Network 1"). At step **810,** the user equipment acquires **(1205;** Fig. 12) the care-of address of the local foreign agent (GGSN₁/FA₁/AAA₁) in the first serving network from agent advertising messages that are broadcast by the foreign agent in accordance with conventional techniques. As shown at optional step **805,** the user equipment may alternatively acquire the foreign agent care-of address (FA COA) through modified system messages broadcast over the air interface.

After acquisition of the FA COA, the user equipment initiates **815** a MIP registration request **(1210;** Fig. 12) to the local foreign agent (GGSN₁/FA₁/AAA₁) in serving network 1. The MIP request would include a Network Access Identifier (NAI) that identifies the user equipment's home environment. The MIP registration request, however, may be included as an optional information element within the original PDP context Activation message from the user equipment so as to minimize the signaling sequence. If, though, the user equipment is not MIP capable, then the GGSN in the current serving network can assume the role of surrogate agent and initiate a MIP registration request after PDP context activation on behalf of the user equipment.

The FA₁/AAA₁ component of GGSN₁ then determines **820** that the registration request must be forwarded to the home environment identified by the NAI. FA₁/AAA₁ sends **825** the registration request (e.g., a DIAMETER message) **(1215;** Fig. 12) to the AAA server (AAAₕₒₘₑ) in the home environment. If the registration request requests the assignment of a home agent, AAAₕₒₘₑ will attempt to assign a home agent (HA3) from the serving network if one is available and is capable of handling the load **900.** If one is not available, AAAₕₒₘₑ will assign **905** a home agent in the home environment HA1. AAAₕₒₘₑ then forwards **910** the MIP registration request **(1220;** Fig. 12) in an AAA message to HA3.

Upon receipt of the forwarded MIP registration request, HA3 validates **915** and stores binding information for the mobile terminal and then updates the routing table. HA3 then formulates a registration reply **(1225;** Fig. 12) and returns **920** it to the AAAₕₒₘₑ server in the home environment. The AAAₕₒₘₑ server returns **925** a response **1230** to the registration reply and the registration reply message is forwarded to the user equipment.

Subsequent to the above-described registration procedure, the user may roam to a new routing area serviced by a new SGSN (SGSN₂) in a network administered by a different service provider. The user equipment then performs **1000** a routing area update procedure **(1235;** Fig. 12), wherein the routing area parameters may include additional information such as the old foreign agent address and the current home agent address. The user equipment would then acquire **1005** the new FA COA from an unsolicited PDP context activation response **(1240;** Fig. 12) from the new foreign agent in the new GGSN. Optionally, the user equipment could acquire **1010** the FA COA in system broadcast messages.

The new SGSN (SGSN₂) then determines if MIP connectivity is required. If MIP connectivity is required, and is supported by GGSN₂, SGSN₂ initiates **1015** an unsolicited PDP context activation which may contain information regarding the old foreign agent, the current home agent, and the NAI. The activation request **(1245;** Fig. 12) would be sent to a pre-defined foreign agent such as GGSN2/FA₂/AAA₂. If roaming agreements between the provider of serving network 1 and the provider of serving network 2 permit, the new foreign agent FA₂ communicates **(1250;** Fig. 12) with the old foreign agent FA₁ to inform FA₁ that the user equipment is currently located within FA₂'s service area. FA₂ then formulates **1025** a MIP registration request using the information received in the unsolicited PDP context activation and forwards the request **(1255;** Fig. 12) to AAAₕₒₘₑ. This MIP registration request may indicate that a new home agent be allocated. FA₂ will now be ready to receive forwarded packets.

After receipt of the MIP registration request from FA₂, the home environment AAA server forwards **1030** the request **(1260;** Fig. 12) to the home agent HA4 in serving network 2 to create binding information for the user equipment and to update the routing table. When a successful MIP registration reply is received, AAAₕₒₘₑ notifies **1100** HA3 to remove the binding information if not currently in use. AAAₕₒₘₑ then forwards **1105** the MIP reply answer **(1265;** Fig. 12) to FA₂ in an AAA message.

The above described exemplary embodiments describe inter-packet domain roaming in either GPRS or MobileIP networks. However, one skilled in the art will recognize that these exemplary techniques can be applied to any IP based communication protocol. For example, the exemplary embodiments describing inter-packet domain roaming using MobileIP protocol can be applied to other multi-media networks such as H.323 or SIP. The protocols currently defined in H.323 and SIP would need to be changed to include this functionality in accordance with the exemplary embodiments.

The above described exemplary embodiment describes how session mobility between two packet networks in a wireless system is achieved. A session, as is known today in the datacom world, is used to run one or more applications (e.g., voice over IP, web browsing). A session is transparent to the network layer, therefore when a user moves from one network to another, the session is unaware that the lower layers are reconfigured due to a new re-established connection. Session mobility involves a user having an active session on his/her user equipment and moves together with the equipment towards a new area served by a new network. The two networks cooperate in order to allow the user to continue working with his/her ongoing session.

Session mobility also involves a user having an open and active session running on his/her user equipment and moving without taking the equipment to another network (e.g., from work to home). The user, in the new network decides to connect to and continue with the same session through a different terminal. The exemplary embodiments described above could be used to allow for both scenarios. The second scenario, however, allows for total network transparency and permits the user to connect to an ongoing session via another terminal located in a different network that may be wireless or fixed. For example, if a user is engaged in a session at a first terminal connected to a first network, the user may connect to a second terminal in a second network and the session may be re-routed, applying the exemplary embodiments described above, to the new terminal without loss of the ongoing session. Re-routing of the session may be achieved using a new user interface at the first terminal which prompts the user to enter the terminal to which the user is transferring. The input terminal information is then converted to a location (e.g., network entity address serving the terminal) of the new system by querying a local database (e.g., DNS).

Although a number of embodiments are described herein for purposes of illustration, these embodiments are not meant to be limiting. Those skilled in the art will recognize modifications that can be made in the illustrated embodiments.

## Claims

1. A method of keeping a session active and connected with a user equipment while changing data communications networks from a first data communications network to a second data communications network, comprising the steps of:
receiving packets, associated with a user session, from a first data communications network;
sending (320) a connection request from a gateway (600) in said first network to one or more gateways (605, 610) in neighbouring data communications networks (630,635);
locating (325 or 330) the user equipment in the second data communications network, by a second gateway in the second data communications network, said second gateway being one of said one or more gateways (605, 610) in the neighbouring data communications networks (630, 635);
responding (340), by the second gateway, to the connection request from the gateway (600) in said first network;
establishing a path between the gateway (600) in said first network and the second gateway;
forwarding (345) packets, associated with said user session, from said gateway (600) in said first data communications network to said second gateway; and
receiving, in the user equipment, said forwarded packets from said second gateway.

## Patentansprüche

1. Verfahren zum Aktivhalten einer Session und Aufrechterhalten der Verbindung mit einer Benutzerausstattung während des Wechselns von Datenkommunikationsnetzwerken von einem ersten Datenkommunikationsnetzwerk zu einem zweiten Datenkommunikationsnetzwerk, die folgenden Schritte umfassend:
Empfangen von Paketen in Verbindung mit einer Benutzersession von einem ersten Datenkommunikationsnetzwerk,
Senden (320) einer Verbindungsanfrage von einem Gateway (600) in dem ersten Netzwerk zu einem oder mehreren Gateways (605, 610) in benachbarten Datenkommunikationsnetzwerken (630, 635),
Lokalisieren (325 oder 330) der Benutzerausstattung in einem zweiten Kommunikationsnetzwerk durch ein zweites Gateway in dem zweiten Kommunikationsnetzwerk, wobei das zweite Gateway das eine oder die mehreren Gateways (605, 610) in den benachbarten Datenkommunikationsnetzwerken (630, 635) ist,
Reagieren (340) des zweiten Gateways auf die Verbindungsanfrage von dem Gateway (600) in dem ersten Netzwerk,
Herstellen eines Pfads zwischen dem Gateway (600) in dem ersten Netzwerk und dem zweiten Netzwerk,
Weiterleiten (345) von Paketen, die mit der Benutzersession verbunden sind, von dem Gateway (600) in dem ersten Datenkommunikationsnetzwerk zu dem zweiten Gateway, und
Empfangen der von dem zweiten Gateway weitergeleiteten Pakete in der Benutzerausstattung.

## Revendications

1. Procédé de maintien de l'activité et de la connexion d'une session d'un équipement d'utilisateur, pendant le changement de réseaux de communication de données, entre un premier réseau de communication de données et un second réseau de communication de données, comprenant les étapes consistant à :
recevoir des paquets, associés à une session d'utilisateur, en provenance d'un premier réseau de communication de données ;
envoyer (320) une demande de connexion entre une passerelle (600) dans ledit premier réseau et une ou plusieurs passerelles (605, 610) dans des réseaux de communication de données adjacents (630, 635) ;
faire localiser (325 ou 330) l'équipement d'utilisateur dans le second réseau de communication de données, par une seconde passerelle dans le second réseau de communication de données, ladite seconde passerelle étant l'une desdites une ou plusieurs passerelles (605, 610) dans les réseaux de communication de données adjacents (630, 635) ;
faire répondre (340) par la seconde passerelle à la demande de connexion provenant de la passerelle (600) dans ledit premier réseau ;
établir un trajet entre la passerelle (600) dans ledit premier réseau et la seconde passerelle ;
transférer (345) des paquets, associés à ladite session d'utilisateur, entre ladite passerelle (600) dans ledit premier réseau de communication de données et ladite seconde passerelle ; et
recevoir, sur l'équipement d'utilisateur, lesdits paquets transférés en provenance de ladite seconde passerelle.
